Europäisches Patentamt

European Patent Office

Office européen des brevets

(11) Numéro de publication: **0 031 763**
**B1**

(12) **FASCICULE DE BREVET EUROPEEN**

(45) Date de publication du fascicule du brevet:
14.03.84

(51) Int. Cl.³: **G 21 C 7/12**

(21) Numéro de dépôt: **80401818.2**

(22) Date de dépôt: **18.12.80**

(54) Dispositif de commande d'un réacteur nucléaire par déplacement vertical d'un ensemble absorbant les neutrons.

(30) Priorité: **19.12.79 FR 7931073**

(43) Date de publication de la demande:
08.07.81 Bulletin 81/27

(45) Mention de la délivrance du brevet:
14.03.84 Bulletin 84/11

(84) Etats contractants désignés:
**BE DE GB**

(56) Documents cités:
**DE - C - 1 286 638**
**FR - A - 1 501 050**
**FR - A - 2 041 128**
**FR - A - 2 211 793**
**GB - A - 795 565**
**GB - A - 857 059**
**GB - A - 940 438**
**US - A - 2 952 802**
**US - A - 3 280 002**
**US - A - 3 936 683**

(73) Titulaire: **Framatome, Tour Fiat 1 place de la Coupole,
F-92400 Courbevoie (FR)**

(72) Inventeur: **Defaucheux, Jacques, Résidence Claude
Bernard Appartement 22, F-59460 Jeumont (FR)**
Inventeur: **Pasqualini, Gilbert, 4, allée de l'Océan Indien,
F-59460 Jeumont (FR)**
Inventeur: **Wiart, Albert, 20, rue de la République,
F-95110 Sannois (FR)**
Inventeur: **Martin, Jean, 5, rue Corot, F-92320 Chatillon
(FR)**

(74) Mandataire: **Bouget, Lucien et al,
CREUSOT-LOIRE 15 rue Pasquier, F-75383 Paris
Cedex 08 (FR)**

## Dispositif de commande d'un réacteur nucléaire par déplacement vertical d'un ensemble absorbant les neutrons

L'invention concerne un dispositif de commande d'un réacteur nucléaire par déplacement vertical d'un ensemble absorbant les neutrons à l'intérieur du cœur du réacteur et chute de l'ensemble absorbant en position d'insertion maximum sous l'effet de son propre poids pour l'arrêt d'urgence.

Pour la commande des réacteurs nucléaires, en particulier pour la commande des réacteurs nucléaires à eau pressurisée, on déplace à l'intérieur du cœur des ensembles absorbants constitués par des tubes renfermant un matériau absorbant fortement les neutrons, entre les éléments combustibles et dans la direction verticale.

Ces barres de commande sont introduites par l'extrémité supérieure du cœur, si bien qu'un mouvement vertical et vers le bas correspond à une réduction de la puissance fournie par le réacteur et qu'un mouvement vertical et vers le haut correspond à une augmentation de la puissance fournie par le réacteur.

De plus, si un accident quelconque nécessite un arrêt d'urgence les barres de commande doivent pouvoir chuter sous l'effet de leur poids très rapidement en position d'insertion maximum dans le cœur du réacteur.

Tout dispositif de commande d'un réacteur nucléaire utilisant le déplacement vertical d'ensembles absorbants tels que des barres de commande doit donc être capable de réaliser d'une part le déplacement précis des barres à l'intérieur du cœur avec arrêt possible en une position déterminée et d'autre part la libération instantanée et extrêmement sûre de ces barres de commande, pour l'arrêt durgence.

Pour la réalisation de leurs mouvements verticaux, les barres de commande sont généralement reliées à leur partie supérieure à une tige de commande dont on effectue le déplacement grâce à un mécanisme disposé à l'intérieur d'une enceinte étanche en communication avec l'intérieur du réacteur et renfermant le fluide d'échange du réacteur, par exemple l'eau sous pression dans le cas des réacteurs nucléaires à eau pressurisée.

On a déjà proposé divers types de mécanisme, tels que des mécanismes à cliquets et des mécanismes à pignons et crémaillères pour la réalisation des mouvements de barres de commande. Dans tous les cas, ces mécanismes sont destinés à fonctionner dans un milieu à haute température et à haute pression et en présence de radiations.

On a proposé également, par exemple dans le brevet FR-A-1 455 472, d'utiliser un moteur électromagnétique dont l'élément mobile est constitué par la tige de commande elle-même qui porte des saillies annulaires disposées de manière à réaliser un moteur à réluctance variable engendrant un mouvement de translation exempt de tout mouvement de rotation.

Dans le brevet GB-A-857 059, la tige de commande est reliée à sa partie supérieure à une pièce magnétique comportant des saillies annulaires dont le déplacement est assuré par un ensemble d'électro-aimants alimentés en courant électrique de façon à créer un champ magnétique glissant dans la direction axiale.

De tels dispositifs évitant l'utilisation de mécanismes disposés à l'intérieur d'une enceinte étanche en communication avec l'intérieur du réacteur n'ont cependant jamais pu être valablement mis en œuvre, d'une part à cause du fait qu'ils nécessitent un trop grand nombre de bobines constituant la partie statique du dispositif, et d'autre part, à cause d'un mauvais rendement consécutif à une saturation magnétique de la tige ou de la pièce magnétique due à la concentration axiale du flux magnétique. Par ailleurs, la dépense en énergie pour maintenir la partie mobile en position est importante, ce qui conduit, entre autres inconvénients, à un échauffement prohibitif et oblige à prévoir un dispositif de refroidissement. Enfin, lors de la chute de la tige pour un arrêt d'urgence, le faible intervalle entre les saillies annulaires et la surface intérieure de l'enceinte étanche est insuffisant pour assurer une circulation de l'eau sous pression, sans freinage prohibitif. La vitesse de chute en est réduite d'autant.

Le but de l'invention est donc de proposer un dispositif de commande d'un réacteur nucléaire par déplacement vertical d'un ensemble absorbant les neutrons à l'intérieur du cœur du réacteur et chute de l'ensemble absorbant en position d'insertion maximum sous l'effet de son propre poids pour l'arrêt d'urgence, l'ensemble absorbant étant fixé à l'extrémité inférieure d'une tige de commande verticale, mobile à l'intérieur d'une enceinte cylindrique étanche à axe vertical en communication avec l'intérieur du réacteur à sa partie supérieure à une pièce en matériau magnétique de forme générale cylindrique disposée coaxialement à l'intérieur de l'enceinte étanche, mobile verticalement dans cette enceinte, guidée dans ses déplacements et comportant une pluralité de saillies annulaires également espacées dans la direction axiale de la pièce cylindrique dont le diamètre est un peu inférieur au diamètre intérieur de l'enceinte étanche, le dispositif comportant en outre au moins un inducteur placé à l'extérieur de l'enceinte étanche, muni d'au moins deux masses polaires espacées suivant la direction axiale d'une distance égale à la distance séparant deux saillies annulaires successives de la pièce cylindrique, ces masses polaires étant à une distance de l'enceinte, dans la direction radiale, suffisamment petite pour permettre le couplage magnétique entre l'inducteur et la pièce cylindrique et devant permettre de réaliser des mouvements précis de l'ensemble absorbant et une chute rapide et sûre de cet ensemble absorbant, en cas d'arrêt d'urgence, sans utiliser d'organe mécanique fonctionnant dans un fluide à haute température et/ou à haute pression.

Dans ce but, le dispositif est caractérisé en ce que:

— l'inducteur est mobile,

— des moyens mécaniques de guidage et de déplacement précis de l'inducteur, dans la direction verticale, avec arrêts dans des positions prédéterminées, produisent un déplacement correspondant de la pièce cylindrique,

— et des moyens de commande électromagnétiques disposés à l'extérieur de l'enceinte étanche assurent la liaison entre la tige de commande et la pièce cylindrique, lorsqu'ils sont alimentés en courant électrique et la séparation des éléments, par coupure du courant d'alimentation.

Afin de bien faire comprendre l'invention, on va maintenant décrire à titre d'exemple non limitatif, en se référant aux figures jointes en annexe, un mode de réalisation d'un dispositif de commande suivant l'invention, dans le cas où l'inducteur est constitué par un ensemble de circuits magnétiques à aimants permanents et où la liaison entre la pièce magnétique et la tige de commande est amovible.

La figure 1 représente une vue en coupe par un plan vertical de trace A-A sur la figure 2 du dispositif suivant l'invention.

La figure 2 représente une vue en coupe suivant B-B de la figure 1.

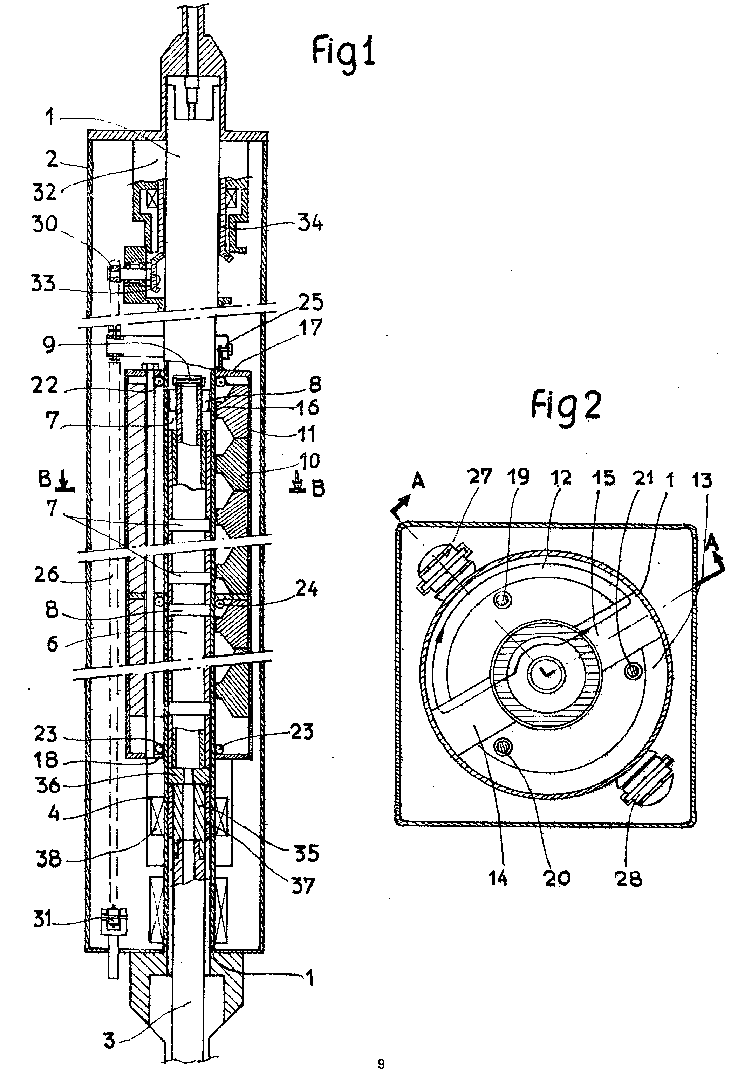

Sur la figure 1 on voit l'enveloppe 1 fixée de façon étanche sur la cuve du réacteur nucléaire à eau sous pression autour de laquelle est disposé uncarter 2 à section carrée à l'intérieur duquel se trouve l'ensemble du dispositif de commande. Ce carter 2 est fixé sur l'enveloppe 1.

Dans la partie intérieure de l'enceinte étanche 1 pénètre la tige de commande 3 qui est reliée à sa partie inférieure non représentée à l'élément absorbant et à sa partie supérieure, par l'intermédiaire d'un dispositif 4 qui sera décrit plus en détail, à une pièce magnétique 6 présentant des parties 7 en saillie dans la direction radiale par rapport au corps de la pièce 6.

Cette pièce magnétique 6 est constituée par une tige centrale creuse sur laquelle sont enfilées successivement des pièces annulaires de grand diamètre en acier magnétique constituant les saillies radiales 7 et des pièces tubulaires de plus faible diamètre constituant le corps de la pièce 6. Les saillies radiales sont espacées d'une longueur constante suivant la direction axiale de la pièce 6. De plus, des pièces annulaires de guidage 8 sont également enfilées sur la tige centrale, l'ensemble des pièces enfilées sur cette tige étant maintenues en position axiale grâce à un système de serrage 9 à l'extrémité supérieure de la tige. L'extrémité inférieure de cette tige centrale est soudée sur une pièce d'extrémité faisant partie du dispositif de fixation 4.

Les pièces annulaires 8 permettent un guidage précis de la pièce 6 à l'intérieur de l'enceinte étanche 1 alors que les pièces annulaires 7 ont un diamètre légèrement inférieur au diamètre intérieur de l'enceinte 1, ces pièces ménageant un très faible jeu dans la direction radiale entre leur surface extérieure et la surface l'enceinte 1.

L'enceinte 1 est en matériau a magnétique.

La tige de commande 3 et la pièce 6 sont entièrement disposées à l'intérieur de l'enceinte 1.

Autour de l'enceinte 1 et à l'intérieur du carter 2 est placé un inducteur mobile 10 qui sera décrit plus en détail en se référant aux figures 1 et 2.

Cet inducteur est constitué par une chemise cylindrique 11 à l'intérieur de laquelle sont empilés des circuits magnétiques, les uns au-dessus des autres dans la direction axiale du dispositif.

Ainsi qu'il est visible à la figure 2, chacun de ces circuits comporte deux pièces 12 et 13 en portion d'anneau constituées par des aimants permanents, par exemple en Ticonal et deux pièces polaires saillantes 14 et 15 en matériau magnétique.

L'ensemble des circuits magnétiques est maintenu à l'intérieur de l'enveloppe cylindrique 11 par deux plaques d'extrémité 17 et 18 et par trois tiges 19, 20 et 21 fixées à leur extrémité traversant les plaques 17 et 18.

Les dispositifs de guidage de l'inducteur 22 et 3 sont fixés sur les plaques d'extrémité 17 et 18 respectivement cependant qu'un troisième dispositif de guidage 24 est intercalé, à la partie centrale de l'inducteur, entre deux circuits magnétiques.

Les dispositifs de guidage 22, 23 et 24 comportent des galets roulant sur la surface externe de l'enceinte étanche 1.

La plaque supérieure 17 porte d'autre part un dispositif de suspension 25 lui-même relié à deux chaînes telles que 26 pour l'entraînement de l'inducteur dans un mouvement de déplacement vertical grâce à des dispositifs d'entraînement 27 et 28 disposés de part et d'autre de l'inducteur.

Chacun des dispositifs d'entraînement 27 ou 28 des chaines, comporte une poulie à chaine motrice telle que 30 et une poulie à chaîne de renvoi telle que 31 disposées respectivement à la partie supérieure et à la partie inférieure du carter 2.

Les poulies motrices telles que 30 sont entraînées par un moteur 32, par l'intermédiaire de pignons coniques tels que 33.

Le moteur 32 est fixé à la partie supérieure de l'enceinte 2 autour de l'enceinte étanche 1. Le mouvement du moteur est transmis par l'intermédiaire d'une chemise 34 dont la partie inférieure constitue un pignon conique engrènant avec les deux pignons tels que 33. De cette manière, les deux chaînes se déplacent en synchronisme dans la direction verticale en entraînant l'inducteur lorsque le moteur 32 est mis en marche.

Le moteur 32 est un moteur asynchrone équipé d'un frein par manque de courant qui permet de réaliser des déplacements préc is de l'inducteur avec arrêt possible dans une position déterminée par coupure du courant.

L'inducteur comporte unnombre de circuits magnétiques égal au nombre de saillies radiales 7 de la pièce magnétique 6 et d'autre part chacune des pièces polaires telles que 14 et 15, ainsi qu'il est visible sur la figure 1 sur la partie droite de laquelle ces pièces polaires ont été représentées en coupe par un plan vertical, présente une saillie radiale dirigée ves la surface extérieure de l'enceinte 1 constituant une masse polaire 16 ménageant un très faible jeu entre la pièce polaire et l'enceinte étanche.

Chacune des masses polaires 16 a une dimension, dans la direction verticale, égale à la hauteur des pièces annulaires 7 constituant les saillies radiales de la pièce magnétique 6.

D'autre part l'écartement des masses polaires 16 dans la direction verticale est égal à l'espacement dans la direction verticale des saillies radiales 7 de la pièce 6.

Chacun des ensembles de pièces polaires 14 et 15 ménage ainsi des parties en saillie constituant une sorte de denture de même pas que les saillies de la pièce magnétique 6.

Lorsque la pièce magnétique 6 est disposée à l'intérieur de lenceinte étanche 1 de façon que chacune des saillies 7 soit disposée approximativement en face d'une masse polaire 16, un flux magnétique de direction sensiblement radiale traverse les parties en saillie de la pièce magnétique 6 entre les deux masses polaires disposées de par et d'autre de l'enceinte étan he. Si la pièce magnétique 6 à la partie inférieure de laquelle est reliée la tige de commande est laissée libre de ses mouvements dans la direction verticale, la pièce magnétique prend une position telle que représentée à la figure 1 correspondant à l'équilibre entre le poids de la pièce magnétique, de la tige et de l'élément absorbant et les forces magnétiques engendrées au niveau des parties en saillie de la pièce magnétique et des masses polaires de l'inducteur, tendant à réduire la réluctance opposée au passage de flux.

On comprand que lors des déplacements verticaux de l'inducteur provoqués par les dispositifs à chaînes 27 et 28, la pièce magnétique 6 subira des déplacements similaires entraînant des déplacements verticaux de la tige de commande et de l'ensemble absorbant.

De même, lors des arrêts en position de l'inducteur, la masse magnétique, la tige de commande et l'ensemble absorbant resteront en position fixe dans la direction verticale.

On peut donc effectuer le réglage de puissance du réacteur avec un mécanisme disposé entièrement à l'extérieur de l'enceinte étanche, la transmission du mouvement à la tige de commande disposée à l'intérieur de l'enceinte étanche se faisant par accouplement magnétique entre l'inducteur 10 et la pièce magnétique 6.

D'autre part la pièce magnétique 6 est reliée à sa partie inférieure à la tige de commande 3 par l'intermédiaire d'un dispositif de liaison 4 comportant une pièce 36 reliée à la pièce terminale de l'ensemble magnétique 6 prolongée vers le bas par une chemise 37, l'ensemble 36-37 ayant la forme d'une cloche coiffant une pièce 35 solidaire de la tige de commande 3.

Le dispositif de liaison comporte d'autre part un électro-aimant 38 fixé à la plaque inférieure 18 de l'inducteur et entourant l'enceinte étanche 1 au niveau du dispositif de liaison 35-36-37.

L'électroaimant 38 permet de réaliser la liaison entre la tige de commande et la pièce magnétique lorsqu'il est alimenté ou au contraire la libération de la tige de commande et de l'ensemble absorbant qui peuvent chuter sous l'effet de leur propre poids lorsqu'on coupe le courant de l'électro-aimant 38.

L'électro-aimant 38 constitue la commande électromagnétique du dispositif de liaison entre la tige de commande et la pièce magnétique.

En cas d'arrêt d'urgence, la chute des barres est obtenue très rapidement et de façon extrêmement sûre en coupant le courant dans l'électro-aimant 38.

Pour éviter les interférences entre le champ magnétique développé par l'électro-aimant et les champs magnétiques développés par les aimants de l'inducteur, il est possible de réaliser la pièce terminale de l'ensemble 6 en un matériau non magnétique.

La tige de commande 3 a un diamètre très inférieur au diamètre intérieur de l'enceinte étanche, si bien que lors de la chute de cette tige avec l'ensemble absorbant, en cas d'arrêt d'urgence, il n'y a pas de résistance à la chute de l'ensemble absorbant au niveau de la tige de commande, puisqu'une grande section de passage d'eau est ménagée autour de cette tige de commande dans l'enceinte étanche. La chute des barres se fait donc de façon extrême sûre et extrêmement rapide.

On voit donc que les principaux avantages de l'invention sont de permettre de réaliser des déplacements extrêmement précis et faciles à contrôler de l'ensemble absorbant pour la commande du réacteur, grâce à un mécanisme placé à l'extérieur de l'enceinte étanche, la transmission du mouvement à la tige de commande et à l'ensemble absorbant se faisant par accouplement magnétique à travers l'enceinte étanche et de permettre également de provoquer la chute de l'ensemble absorbant pour l'arrêt d'urgence de façon extrêmement sûre et extrêmement rapide.

Mais l'invention ne se limite pas au mode de réalisation qui vient d'être décrit; elle en comporte au contraire toutes les variantes.

C'est ainsi qu'on a décrit un mode de réalisation où l'inducteur comportait un ensemble de circuits magnétiques à aimants permanents comportant deux pôles mais qu'il est possible également d'utiliser des circuits magnétiques à trois ou quatre pôles, la configuration devant être choisie pour permettre le meilleur couplage entre l'inducteur et la pièce magnétique.

L'inducteur qui a été décrit comportait des circuits magnétiques à flux radial mais il est également possible d'imaginer un inducteur comportant une succession de pièces polaires annulaires présentant des saillies radiales vers l'enceinte étanche et d'aimants permanents annulaires intercalés entre les pièces polaires, ce circuits magnétiques développant un flux de direction axiale permettant l'accouplement magnétique de l'inducteur et de la pièce magnétique centrale à saillies radiales.

Il est également possible de remplacer les aimants permanents des circuits magnétiques par des bobinages alimentés en courant électrique pour la création d'un champ magnétique.

On peut ainsi imaginer un inducteur comportant une paire de bobines disposées en selle autour de l'enceinte et une pièce polaire annulaire entourant les bobines sur la face intérieure de laquelle ont été prévus des évidements annulaires de manière à réaliser des saillies constituant les masses polaires de l'inducteur.

On peut également imaginer un inducteur constitué par un solénoïde disposé autour de l'enceinte étanche dans une pièce en matériau magnétique formant deux masses polaires de même largeur et de même écartement que les saillies radiales de la pièce magnétique disposée dans l'enceinte étanche.

Dans le cas où l'inducteur comporte un bobinage, il faut prévoir une alimentation par câbles flexibles de cet inducteur, de même qu'il faut prévoir un câble flexible d'alimentation en courant électrique de l'électro-aimant du dispositif de liaison entre la tige de commande et la pièce magnétique.

Dans le cas où l'inducteur comporte un ou plusieurs bobinages, il est possible de réaliser la chute des barres en coupant le courant dans l'inducteur en désaccouplant ainsi la pièce magnétique et l'inducteur.

Dans ce cas il est bon d'usiner la pièce magnétique qui chute avec la tige et la barre de commande de façon à y réaliser des passages d'eau pour éviter de freiner la chute des barres.

Dans l'exemple de réalisation qui a été décrit, la liaison entre la tige de commande et la pièce magnétique résultait des forces magnétiques développées dans des pièces correspondantes reliées respectivement à la tige de commande et à la pièce magnétique mais il est possible également de réaliser cette liaison en montant à l'extrémité inférieure de la pièce magnétique un dispositif à doigts pivotants qui peut être commandé de l'extérieur de l'enceinte par un électro-aimant. L'extrémité supérieure de la tige de commande est alors usinée de façon à ménager une gorge pour permettre aux doigts pivotants de venir en prise sur cette tige.

Dans l'exemple de réalisation qui a été décrit, l'entraînement de l'inducteur se faisait par des chaînes mécaniques et des poulies à chaines entraînées par un moteur asynchrone mais il est également possible d'utiliser d'autres dispositifs d'entraînement tels que chaînes à maillons soudés ou câblés et d'autres dispositifs moteurs tels que moteur pas à pas.

On pourrait également utiliser deux vis disposées verticalement et montées rotatives autour de leur axe vertical dans le carter entourant l'enceinte étanche, ces vis coopérant avec des écrous flottants solidaires de l'inducteur.

On pourrait également imaginer un dispositif à pignon et crémaillère pour l'entraînement de l'inducteur.

Le nombre de masses polaires et de saillies annulaires radiales de la pièce magnétique sont évidemment déterminés par les caractéristiques du matériel utilisé mais dans tous les cas la répartition axiale de plusieurs masses polaires disposées en face de saillies radiales de la tige favorise la stabilité transversale de la masse magnétique lors de ses déplacements.

Au lieu d'un seul inducteur on peut utiliser un ensemble d'inducteurs se déplaçant de façon synchronisée.

Enfin, l'invention s'applique non seulement au cas des réacteurs nucléaires à eau sous pression mais également dans le cas de tous les réacteurs nucléaires dont la commande est réalisée par déplacement d'un ensemble absorbant les neutrons à l'intérieur du cœur du réacteur, l'arrêt d'urgence étant obtenu par chute de l'ensemble absorbant sous l'effet de son poids en position d'insertion maximum.

**Revendications**

1. Dispositif de commande d'un réacteur nucléaire par déplacement vertical d'un ensemble absorbant les neutrons à l'intérieur du cœur du réacteur et chute de l'ensemble absorbant en position d'insertion maximum sous l'effet de son propre poids pour l'arrêt d'urgence, l'ensemble absorbant étant fixé à l'extrémité inférieure d'une tige de commande verticale (3) mobile à l'intérieur d'une enceinte cylindrique étanche (1) à axe vertical en communication avec l'intérieur du réacteur et reliée à sa partie supérieure à une pièce (6) en matériau magnétique de forme générale cylindrique disposée coaxialement à l'intérieur de l'enceinte étanche (1), mobile verticalement dans cette enceinte (1), guidée dans ses déplacements et comportant une pluralité de saillies annulaires (7) également espacées dans la direction axiale de la pièce cylindrique (6) dont le diamètre est un peu inférieur au diamètre intérieur de l'enceinte étanche (1), le dispositif comportant en outre au moins un inducteur (10) placé à l'extérieur de l'enceinte étanche (1), muni d'au moins deux masses polaires (16) espacées suivant la direction axiale d'une distance égale à la distance séparant deux saillies annulaires (7) successives de la pièce cylindrique (6), ces masses polaires étant à une distance de l'enceinte (1) dans la direction radiale, suffisamment petite pour permettre le couplage magnétique entre l'inducteur (10) et la pièce cylindrique (6), caractérisé en ce que:
— l'inducteur (10) est mobile,
— des moyens mécaniques (22, 23, 24, 26, 27, 28) de guidage et de déplacement précis de l'inducteur (10), dans la direction verticale, avec arrêts dans des positions prédéterminées, produisent un déplacement correspondant de la pièce cylindrique (6),

— et des moyens de commande électromagnétiques, disposés à l'extérieur de l'enceinte étanche (1), assurent la liaison entre la tige de commande (3) et la pièce cylindrique (6), lorsqu'ils sont alimentés en courant électrique et la séparation des éléments (3, 6) par coupure du courant d'alimentation.

2. Dispositif de commande suivant la revendication 1 caractérisé par le fait que l'inducteur (10) est constitué par un empilement, dans la direction verticale, de circuits magnétiques à aimants permanents (12, 13, 14, 15).

3. Dispositif de commande suivant la revendication 1, caractérisé par le fait que l'inducteur (10) comporte au moins un bobinage alimenté en courant électrique.

4. Dispositif de commande suivant l'une quelconque des revendications 1, 2 et 3, caractérisé par le fait que le moyen de déplacement de l'inducteur est constitué par un ensemble d'au moins deux chaînes sans fin (26) passant d'une part sur une poulie motrice (30) et d'autre part sur une poulie de renvoi (31), les poulies motrices étant entraînées par un moteur asynchrone à frein par manque de courant.

5. Dispositif de commande suivant l'une quelconque des revendications 1, 2 et 3, caractérisé par le fait que le moyen de déplacement de l'inducteur (10) est constitué par au moins deux vis verticales rotatives autour de leur axe vertical et par des écrous flottants solidaires de l'inducteur (10) en prise avec ces vis entraînées par un moteur électrique.

**Patentansprüche**

1. Vorrichtung zum Steuern einer Kernreaktoranlage durch senkrechte Verschiebung innen in dem Reaktorkern von Neutronen-Absorbermaterial und für das Schnellschließen Fallen des Absorbermaterials unter seinem Eigengewicht in die maximale Einfahrstellung, wobei das Absorbermaterial am unteren Ende einer innen in einem dichten Zylindermantel (1) mit senkrechter Achse beweglichen senkrechten Steuerstange (3) befestigt ist, die mit dem Reaktorinneren in Verbindung steht und an ihrem Oberteil mit einem senkrecht in diesem Mantel (1) beweglich geführten allgemein zylinderförmigen innen in dem dichten Mantel (1) koaxial angeordneten Teil (6) aus Magnetwerkstoff verbunden ist, das mehrere kreisförmige ebenfalls in der Axialrichtung des Zylinderteils (6) im Abstand angeordneten Vorsprünge (7) mit einem etwas kleineren Durchmesser als der Innendurchmesser des dichten Mantels (1) aufweist, wobei außerdem die Vorrichtung mindestens einen außen an dem dichten Mantel (1) angeordneten Induktor (10) mit mindestens zwei Pole (16) aufweist, die in der Axialrichtung um einen der Entfernung zwischen zwei aufeinanderfolgenden kreisförmigen Vorsprünge (7) des Zylinderteils (6) entsprechenden Abstand angeordnet sind, wobei diese Pole in einer ausreichend geringen Entfernung in Radialrichtung von dem Mantel (1) liegen, damit der Induktor (10) und der Zylinderteil (6) magnetisch gekoppelt werden können, dadurch gekennzeichnet, daß

— der Induktor (10) beweglich ist,

— mechanische Mittel (22, 23, 24, 26, 27, 28) zur genauen Führung und Verschiebung in der senkrechten Richtung des Induktors (10) mit Unterbrechungen in vorbestimmten Stellungen eine entsprechende Verschiebung des Zylinderteils (6) bewirken,

— außen an dem dichten Mantel (1) angeordnete elektromagnetische Betätigungsmittel die Verbindung zwischen der Steuerstange (3) und dem Zylinderteil (6) herstellen, wenn sie mit Strom versorgt werden, und bei Stromunterbrechung die Trennung der Elemente (3, 6) bewirken.

2. Steuervorrichtung nach Anspruch 1, dadurch gekennzeichnet, daß der Induktor (10) aus in senkrechter Richtung gestapelten Magnetkreise mit Dauermagneten (12, 13, 14, 15) besteht.

3. Steuervorrichtung nach Anspruch 1, dadurch gekennzeichnet, daß der Induktor (10) mindestens eine mit Strom versorgte Wicklung umfaßt.

4. Steuervorrichtung nach einem der Ansprüche 1, 2 und 3, dadurch gekennzeichnet, daß das Induktor-Verschiebemittel aus mindestens zwei endlosen Ketten (26) besteht, die einerseits über eine Antriebsrolle (30) und andererseits über eine Umlenkrolle (31) laufen, wobei die Antriebsrollen über einen Stromausfallbremse-Asynchronmotor angetrieben werden.

5. Steuervorrichtung nach einem der Ansprüche 1, 2 und 3, dadurch gekennzeichnet, daß das Mittel zum Verschieben des Induktors (10) aus mindestens zwei sich um ihre Senkrechtachse drehenden senkrechten Schrauben und aus mit dem Induktor (10) fest verbundene Muttern besteht, wobei der Induktor mit diesen über einen Elektromotor angetriebenen Schrauben im Eingriff steht.

**Claims**

1. A device for controlling a nuclear reactor by vertical movement of a neutron-absorbing assembly inside the reactor core and fall of the absorbing assembly into a position of maximum insertion under the effect of its own weight for emergency shutdown, the absorbing assembly being fixed to the lower end of a vertical control shaft (3) which is moveable inside a leakproof cylindrical enclosure (1) having a vertical axis and communicating with the inside of the reactor, and which is connected in its uper part to a component (6) made of a magnetic material of a generally cylindrical shape, arranged coaxially inside the leakproof enclosure (1), which is capable of moving verticaly in this enclosure (1), is guided in its movements and comprises a plurality of annular projections (7) equally spaced along the axial direction of the cylindrical component (6) whose diameter is slightly smaller than the internal diameter of the leakproof enclosure (1), the device additionaly comprising at least one inductor (10) placed outside the leakproof enclosure (1), equipped with at least two polar bodies (16) separated along the axial direction by a distance which is equal to the distance separating two successive annular projections (7) of the cylindrical component (6), these polar bodies being separated from the enclosure (1) in the radial direction by a distance which is sufficiently small to permit the magnetic coupling between the inductor (10) and the cylindrical component (6), characterised in that:

— the inductor (10) is moveable,

— mechanical means (22, 23, 24, 26, 27, 28) for guiding and accurately moving the inductor (10) in the vertical direction, with stops in predetermined positions, produce a corresponding movement of the cylindrical component (6),

— and electromagnetic means of control, which are arranged outside the leakproof enclosure (1), ensure the connection between the control shaft (3) and the cylindrical component (6), when they are supplied with an electric current, and the separation of the components (3 and 6) when the supply current is cut off.

2. A control device according to Claim 1, characterised in that the inductor (10) consists of a stack, in the vertical direction, of magnetic circuits having permanent magnets (12, 13, 14 and 15).

3. A control device according to Claim 1, characterised in that the inductor (10) comprises at least one coil supplied with electric current.

4. A control device according to any one of Claims 1,2 and 3, characterised in that the means for moving the inductor consists of an assembly of at least two endless chains (26) passing, on the one hand, over a driving pulley (30) and, on the other hand, over a return pulley (31), the driving pulleys being driven by an induction motor braked by absence of a current.

5. A control device according to any one of Claims 1, 2 and 3, characterised in that the means for moving the inductor (10) consists of at least two vertical screws capable of rotation around their vertical axes and of floating nuts integrally fixed to the inductor (10) and engaged with these screws which are driven by an electric motor.

Fig1

Fig2